# EUROPÄISCHE PATENTANMELDUNG

(11) **EP 3 543 220 A1**
(43) Veröffentlichungstag der Anmeldung: **25.09.2019**
(21) Anmeldenummer: 18163482.5
(22) Anmeldetag: 22.03.2018
(51) Int. Cl.: C04B 28/02, C04B 40/00, C04B 103/10

(54) **HERSTELLUNG VON CALCIUMHYDROXID NANOPARTIKELN UND IHRE VERWENDUNG ALS BESCHLEUNIGER IN MINERALISCHEN BINDEMITTELZUSAMMENSETZUNGEN**

(71) Anmelder: SIKA TECHNOLOGY AG, 6340 Baar (CH)
(72) Erfinder: Juilland, Patrick, 3005 Bern (CH); Gallucci, Emmanuel, 8048 Zürich (CH); Schönenberger, Denise, 8483 Kollbrunn (CH); Pegado, Luis, 5200 Brugg (CH); Frunz, Lukas, 8305 Dietlikon (CH); Eberhardt, Arnd, 8400 Winterthur (CH)
(74) Vertreter: Sika Patent Attorneys

(57) **Zusammenfassung**

Die Erfindung betrifft eine wässrige Suspension umfassend 5 bis 65 Gewichts-% Calciumhydroxid, wobei mindestens 50 Gewichts-% des Calciumhydroxids in Form von Nanopartikeln vorliegen, und mindestens eine Verbindung zur Stabilisierung der Suspension.

Die wässrige Suspension beschleunigt das Abbinden mineralischer Bindemittelzusammensetzungen ohne die Verarbeitungseigenschaften der Zusammensetzung negativ zu beeinflussen.

## Beschreibung

### Technisches Gebiet

Die Erfindung betrifft eine wässrige Suspension von Calciumhydroxid-Nanopartikeln, ein Verfahren zu deren Herstellung sowie die Verwendung der Suspension als Beschleuniger für mineralische Bindemittelzusammensetzungen.

### Stand der Technik

Zement ist ein mineralisches Bindemittel und wird hauptsächlich für Beton und Mörtel eingesetzt. Wird Zement mit Wasser gemischt, härtet er in einem chemisch ablaufenden Prozess, der Zementhydratation, aus. Bei der Zementhydratation, die auch Abbinden des Zementes genannt wird, entstehen Zementhydrate. Diese fungieren im Beton und Mörtel als Bindemittel für die Zuschlagstoffe, üblicherweise Sand, Kies und Steine, wodurch ein fester Formkörper gebildet wird. Die Zementhydratation ist ein exothermer Prozess dessen festigkeitsentwickelnde Reaktion typischerweise erst mit Verzögerung, oft erst mehrere Stunden nach dem Mischen des Zementes mit Wasser, einsetzt.
Für viele Anwendungen von Mörtel oder Beton sind ein rasches Abbinden und eine rasche Festigkeitsentwicklung sehr wichtig, da dadurch Zeit gewonnen wird, was Kosten spart.

Es gibt unterschiedliche Methoden, die Zementhydratation zu beschleunigen. Eine Erhöhung der Temperatur beschleunigt das Abbinden und wird in Fertigteilwerken durch Beheizen von Schalungselementen und Zuschlagstoffen und/oder der Verwendung von warmen Wasser eingesetzt. Diese Technik führt zu erhöhten Kosten und kann nur bedingt ausserhalb von Fertigteilwerken eingesetzt werden.

Eine weitere Möglichkeit zur Beschleunigung der Zementhydratation ist die Zugabe von wasserlöslichen Salzen, wie beispielsweise Calciumchlorid, Calcium- oder Natriumnitrit, und/oder Aminen, wie beispielsweise Hydroxyalkylamine. Ihre Beschleunigungswirkung ist aber begrenzt und/oder ihre Verwendung eingeschränkt. Calciumchlorid führt zu Stahlkorrosion in armiertem Beton, Nitrite und Amine sind gesundheitsschädlich und Amine können Betonierarbeiten durch unangenehmen Geruch beeinträchtigen.
Die wasserlöslichen Beschleuniger des Standes der Technik haben weiter den Nachteil, dass die mit ihnen beschleunigten Mörtel- oder Betonmischungen rasch ansteifen, das heisst, sie verlieren rasch ihre gute Verarbeitbarkeit. Die so beschleunigten Mörtel- oder Betonmischungen müssen meist innerhalb von einer Stunde oder darunter verarbeitet sein, was oft, speziell bei langen Transportzeiten des Frischmörtels- oder Frischbetons, nicht möglich ist.
Als weitere Möglichkeit, das Abbinden von Zement zu beschleunigen, ist die Zugabe von feinen anorganischen Pulvern beschrieben.
EP 1719742 beschreibt die Verwendung von Calciumhydroxid-Pulver mit einer spezifischen BET-Oberfläche von 25 m²/g oder mehr als Beschleunigerkomponente in einem hydraulischen Bindemittel.
WO 2008/034616 beschreibt die Zugabe von Calciumhydroxid-Pulver mit einer BET-Oberfläche von 7 bis 16 m²/g oder einer mittleren Teilchengrösse von 4.5 bis 7 µm, zur Beschleunigung einer hydraulischen Bindemittelzusammensetzung.
Die Handhabung von Pulvern ist typischerweise mit Staubbildung verbunden, speziell, wenn das Pulver sehr fein ist. Das alkalische Calciumhydroxid-Pulver kann leicht zu Schädigungen von Augen, Atemwegen und Haut von Personen führen, die damit arbeiten.

Es besteht daher weiterhin der Bedarf nach einem hoch wirksamen Beschleuniger für mineralische Bindemittelzusammensetzungen, speziell für zementöse Zusammensetzungen, der die genannten Nachteile möglichst überwindet.

### Darstellung der Erfindung

Aufgabe der vorliegenden Erfindung ist es daher, einen gut handhabbaren Beschleuniger für mineralische Bindemittelzusammensetzungen, insbesondere für zementöse Bindemittelzusammensetzungen, wie beispielsweise Mörtel oder Beton, bereitzustellen, der hoch wirksam und lagerstabil ist, einfach und rasch hergestellt werden kann und eine ausreichend lange Verarbeitungszeit gewährleistet.
Überraschenderweise wird die Aufgabe durch eine wässrige Suspension, wie in Anspruch 1 beschrieben, gelöst.

Die wässrige Suspension bildet keine gesundheitsschädlichen Stäube und ist einfach zu dosieren.

Überraschenderweise bewirkt die erfindungsgemässe Suspension eine überaus effektive Beschleunigung der Hydratationsreaktion von Zement und zementösen Zusammensetzungen. Sie verkürzt die sogenannte Ruheperiode, das ist die Zeit zwischen dem Vermischen des Zementes mit Wasser und dem Start der exothermen Hydratationsreaktion, und sie beschleunigt die Hydratationsreaktion selbst.
Zusätzlich schützt das Calciumhydroxid, beispielsweise in armiertem Beton oder in Spannbeton, die Armierungseisen vor rascher Korrosion.
Obwohl Feststoffsuspensionen die Tendenz zu Agglomeratbildung und Sedimentation haben, was sich negativ auf die Lagerstabilität und die Wirkung als Beschleuniger auswirken kann, ist die erfindungsgemässe Suspension überraschenderweise gut lagerstabil und neigt nicht zu Sedimentation. Überraschenderweise gewährleistet die Suspension, wenn sie einer Mörtel- oder Betonmischung zugegeben wird, sowohl eine lange Verarbeitungszeit als auch eine starke Beschleunigung der Festigkeitsentwicklung, was ein grosser Vorteil ist.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist eine wässrige Suspension umfassend
- 5 bis 65 Gewichts-% Calciumhydroxid, wobei mindestens 50 Gewichts-% des Calciumhydroxids in Form von Nanopartikeln vorliegen, und
- mindestens eine Verbindung zur Stabilisierung der Suspension.

Nanopartikel sind Partikel deren Grösse im Nanobereich liegt. Diese ultrafeinen Partikel zeichnen sich durch eine sehr hohe spezifische Oberfläche und dadurch spezielle Eigenschaften aus.
Unter "Nanopartikel" werden im vorliegenden Dokument Partikel bezeichnet, die eine Grösse von unter 1 µm aufweisen.
Unter der "Partikelgrösse" wird im vorliegenden Dokument der Durchmesser der Partikel verstanden.
Unter "D50"-Wert wird im vorliegenden Dokument jener Wert für die Partikelgrösse verstanden, bei dem 50 Gewichts-% der Partikel kleiner und 50 Gewichts-% der Partikel grösser sind als dieser Wert.
Der "D10"-Wert gibt jenen Wert der Partikelgrösse an, bei dem 10 Gewichts-% der Partikel kleiner sind als dieser Wert.
Der "D90"-Wert gibt jenen Wert der Partikelgrösse an, bei dem 90 Gewichts-% der Partikel kleiner sind als dieser Wert.
Unter "mineralisches Bindemittel" wird im vorliegenden Dokument insbesondere ein Bindemittel, welches in Anwesenheit von Wasser in einer Hydratationsreaktion zu festen Hydraten oder Hydratphasen reagiert, verstanden.
Unter "mineralische Bindemittelzusammensetzung" wird im vorliegenden Dokument entsprechend eine Zusammensetzung, enthaltend mindestens ein mineralisches Bindemittel, verstanden. Diese enthält insbesondere das Bindemittel, Füllstoffe und optional eines oder mehrere Zusatzmittel.
Unter "zementöses Bindemittel" wird im vorliegenden Dokument insbesondere ein Bindemittel mit einem Anteil von wenigstens 5 Gewichts-%, insbesondere wenigstens 20 Gewichts-%, bevorzugt wenigstens 35 Gewichts-%, im Speziellen wenigstens 65 Gewichts-%, bei einem maximalen Gehalt von 100 Gewichts-%, Zementklinker verstanden. Der Zementklinker umfasst bevorzugt einen Portlandzementklinker, einen Calciumaluminatklinker oder einen Calciumsulfoaluminatklinker. Mit Zementklinker ist im vorliegenden Dokument insbesondere gemahlener Zementklinker gemeint.
Unter "zementöser Zusammensetzung" wird im vorliegenden Dokument entsprechend eine Zusammensetzung, enthaltend mindestens ein zementöses Bindemittel, verstanden. Diese enthält insbesondere das Bindemittel, Füllstoffe und optional eines oder mehrere Zusatzmittel.
Unter "Mörtel" oder "Beton" werden im vorliegenden Dokument wässrige Dispersionen verstanden, die mindestens einen Zement und mindestens einen mineralischen Füllstoff enthalten und die fähig sind, nach der Hydratation des Zementes in einer festen Form auszuhärten. Unter "Mörtel" werden hierbei Dispersionen, die Füllstoffe mit Partikelgrössen, typischerweise bis maximal etwa 8 mm, und unter "Beton" Dispersionen, die auch Füllstoffe mit Partikelgrössen über 8 mm enthalten, verstanden.
Unter "(Meth)acrylsäure" werden im vorliegenden Dokument sowohl Methacrylsäure als auch Acrylsäure verstanden, dies gilt entsprechend auch für (Meth)acrylate und weitere Verbindungen der (Meth)acrylsäure.

Im vorliegenden Dokument wurde die Partikelgrösse der Calciumhydroxid-Partikel mit zwei unterschiedlichen Instrumenten bestimmt.
Mit dem Gerät HELOS ausgerüstet mit der Dispergiereinheit Quixel, beides von Sympatec, Deutschland, wurde die Partikelgrösse der Calciumhydroxid-Suspensionen mittels Laserbeugung bestimmt. Hierbei wurden die Suspensionen mit gesättigter Calciumhydroxidlösung verdünnt. Bei dieser Messung werden Partikelgrössen von 0.10 bis 8'750 µm in der Suspension erfasst.
Für die Grössenbestimmung der Nanopartikel wurde das Gerät Nanophox der Firma Sympatec, Deutschland, eingesetzt. Hierbei wird die Partikelgrösse mittels dynamischer Lichtstreuung mit Photonenkreuzkorrelationsspektroskopie bestimmt. Das Gerät erfasst Partikelgrössen von 0.5 bis 10'000 nm.

Bevorzugt liegt das Calciumhydroxid in der wässrigen Suspension zu mindestens 65 Gewichts-%, mehr bevorzugt mindestens 75 Gewichts-%, insbesondere mindestens 85 Gewichts-%, in Form von Nanopartikeln vor.

Die Calciumhydroxid-Nanopartikel weisen vorteilhaft eine Partikelgrösse von unter 950 nm, bevorzugt von 10 bis 800 nm, mehr bevorzugt von 20 bis 500 nm, am meisten bevorzugt von 30 bis 400 nm, insbesondere von 40 bis 300 nm, im Speziellen von 50 bis 200 nm, und/oder einen D90-Wert von unter 800 nm, bevorzugt unter 600 nm, insbesondere unter 400 nm, im Speziellen unter 200 nm, gemessen mittels dynamischer Lichtstreuung mit Photonenkreuzkorrelationsspektroskopie, auf.

Suspensionen, die Calciumhydroxid-Partikel mit solchen Dimensionen aufweisen, sind besonders lagerstabil und sehr effektiv in der Beschleunigung von mineralischen Bindemittelzusammensetzungen, insbesondere von zementösen Zusammensetzungen.

Die Lagerstabilität der Suspension wird bevorzugt durch Zentrifugieren und Messen der Trübung der Lösung bestimmt, wie in den Beispielen beschrieben. Je trüber die obere Phase nach dem Zentrifugieren ist, desto weniger Teilchen haben sich abgesetzt und desto stabiler ist die Suspension. Die Trübung wird vorteilhaft mit einem Turbidimeter bestimmt und in NTU-Werten angegeben. NTU bedeutet "Nephelometric Turbidity Unit" oder "nephelometrische Trübungs-Einheit". Je höher dieser Wert ist, desto grösser ist die Trübung der Probe und desto stabiler ist die Suspension.

Vorteilhaft weist die wässrige Suspension, wenn sie einen Gehalt von 10 Gewichts-% Calciumhydroxid aufweist, nach dem Zentrifugieren von 50 ml dieser Suspension in einem 50 ml Zentrifugenröhrchen über 15 Minuten bei 8000 Umdrehungen pro Minute, und Entnahme der obersten 40 ml für die Trübungsmessung, einen Trübungswert von über 3000 NTU, bevorzugt über 4000 NTU, mehr bevorzugt über 5000 NTU, insbesondere über 6000 NTU, im Speziellen über 7000 oder über 8000 NTU, gemessen mit einem HACH® 2100AN Turbidimeter, auf.

Die Suspension kann weiterhin ein Alkalisalz enthalten. Das Alkalisalz kann der Calciumhydroxid-Suspension zugegeben und darin gelöst werden.
Das Alkalisalz kann aber auch bei der Herstellung des Calciumhydroxides durch Fällungsreaktion aus einem wasserlöslichen Calciumsalz und einem Alkalihydroxid entstehen.

Bevorzugt umfasst die wässrige Suspension 0.01 bis 2.5 mol, bevorzugt 0.1 bis 2.2 mol, eines Alkalisalzes, insbesondere eines Natrium-, Kalium- oder Lithiumsalzes, bevorzugt eines Natriumsalzes, von Nitrat, Chlorid, Acetat, Formiat oder Thiocyanat, oder Mischungen davon, bezogen auf 1 mol Calciumhydroxid.
Dies kann eine speziell gute Beschleunigung bewirken.

Für gewisse Anwendungen, speziell als Beschleuniger in zementösen Zusammensetzungen mit Stahlarmierung, ist es vorteilhaft, wenn das Alkalisalz kein Chlorid umfasst. Chloride fördern die Korrosion von Baustahl und können daher schädlich für die Dauerhaftigkeit eines armierten Bauteils sein.

Am meisten bevorzugt ist das Alkalisalz Natrium- oder Kaliumnitrat, insbesondere Natriumnitrat.

In einer weiteren vorteilhaften Ausführung der Erfindung kann die Suspension neben dem Calciumhydroxid noch sehr feines Calciumcarbonat und/oder CSH-Partikel, insbesondere in Form von Nanopartikeln, enthalten. Der Anteil von Calciumcarbonat und/oder CSH-Partikeln liegt bevorzugt bei 0.01 bis 50 Gewichts-%, insbesondere 0.05 bis 30 Gewichts-%, bezogen auf das Gewicht des Calciumhydroxides. Dies kann vorteilhaft für die Beschleunigungswirkung sein.
CSH steht hier für Calciumsilikat-Hydrat.
Vorteilhaft enthält die Suspension kein Calciumsulfat.

Die Suspension enthält mindestens eine Verbindung zur Stabilisierung. Diese Verbindung bewirkt überraschenderweise eine sehr gute Stabilität der Calciumhydroxid-Partikel, insbesondere vermindert und/oder verhindert sie die Agglomeration der Partikel, sodass eine sehr feine, gut lagerstabile Suspension mit einem hohen Anteil an Nanopartikel ermöglicht wird.

Bevorzugt ist die Verbindung zur Stabilisierung der Suspension ein anionisches Polymer umfassend Carboxylatgruppen, Sulfatgruppen, Sulfonatgruppen, Phosphatgruppen oder Phosphonatgruppen, oder Mischungen davon, oder deren Salze.
Das anionische Polymer ist insbesondere ein Polymerisat oder ein Polykondensat.
Bevorzugt ist das anionische Polymer bei pH 12.0, mehr bevorzugt bei pH 7, insbesondere bei pH 4, oder darunter, in Wasser löslich.

Bevorzugt wirkt das anionische Polymer auch als Fliessmittel für mineralische Bindemittelzusammensetzungen, insbesondere für zementöse Zusammensetzungen.
Als anionische Polymere kommen beispielsweise Lignosulfonate, sulfonierte Naphthalin-Formaldehyd-Kondensate, sulfonierte Melamin-Formaldehyd-Kondensate, sulfonierte Vinylcopolymere, Poly(meth)acrylsäure, Copolymere von (Meth)acrylsäure mit (Meth)acrylsäureestern oder Hydroxyalkyl(meth)-acrylaten, Polyalkylenglykole mit Phosphonatgruppen, Polyalkylenglykole mit Phosphatgruppen, Kammpolymere mit anionischen Gruppen und Polyether-Seitenketten, oder deren Salze, oder Mischungen der genannten Polymere, in Frage.
Bevorzugt enthält die Verbindung zur Stabilisierung der Suspension Polyalkylenoxid-Einheiten, insbesondere Polyethylenoxid-Einheiten.

Vorteilhaft ist das anionische Polymer in der wässrigen Suspension stabil. Vorteilhaft weist es keine Gruppen, insbesondere keine Seitenkettenverknüpfungen, auf, die bei einem hohen pH-Wert, insbesondere über 12.0, verseifen.

Insbesondere ist das anionische Polymer ein Kammpolymer umfassend ein Polymer-Rückgrat mit daran gebundenen anionischen Gruppen und Polyalkylenoxid-Seitenketten. Die Seitenketten sind dabei insbesondere über Ester-, Ether-, Imid- und/oder Amidgruppen an das Polycarboxylat-Rückgrat gebunden.

Bevorzugt ist die Verbindung zur Stabilisierung der Suspension ein Kammpolymer welches die Struktureinheiten (i) der Formel I und Struktureinheiten (ii) der Formel II umfasst, 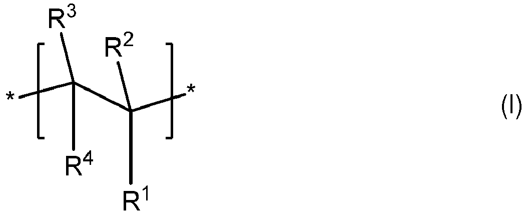 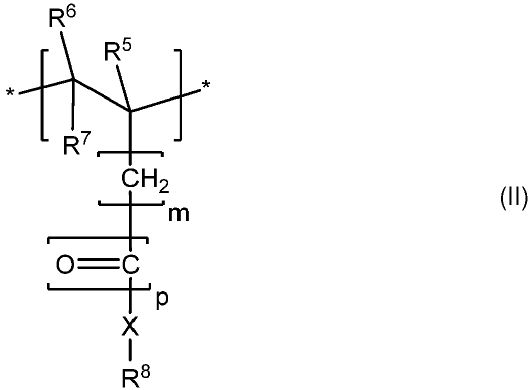 wobei
R¹, jeweils unabhängig voneinander, für -COOM, -SO₂-OM, -O-PO(OM)₂, -PO(OM)₂, -(CO)-NH-C(CH₃)₂-CH₂-SO₃M, -CH₂-SO₃M, 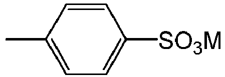 und/oder 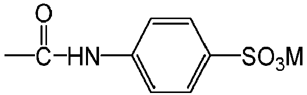 steht,
R²; jeweils unabhängig voneinander, für H, -CH₂COOM oder eine Alkylgruppe mit 1 bis 5 Kohlenstoffatomen steht,
R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
M, unabhängig voneinander, H⁺, ein Alkalimetallion oder ein Erdalkalimetallion, darstellt;
m = 0, 1 oder 2 ist,
p = 0 oder 1 ist,
X, jeweils unabhängig voneinander, für -O-, NH- oder -NR⁸- steht,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, - Cyclohexylgruppe oder -Alkylarylgruppe steht,
und n = 1 bis 250 ist.

Speziell bevorzugt sind Kammpolymere umfassend Struktureinheit (i) und Struktureinheit (ii) wobei,
R¹ für -COOM steht,
R² und R⁵, jeweils unabhängig voneinander, für H oder CH₃ stehen,
R³, R⁶ und R⁷ für H stehen,
R⁴, jeweils unabhängig voneinander, für H oder -COOM steht,
M, jeweils unabhängig voneinander, H⁺, ein Alkalimetallion oder ein Erdalkalimetallion, darstellt;
m = 0, 1 oder 2 ist,
p = 0 oder 1 ist,
X, jeweils unabhängig voneinander, für -O- oder -NH- steht,
R⁸ für eine Gruppe der Formel -[AO]ₙ-R^{a} steht,
wobei A = C₂- bis C₃-Alkylen, bevorzugt C₂-Alkylen, R^{a} für H oder C₁- bis C₄-Alkylgruppe steht, und
n= 10 - 200, bevorzugt 22 - 150, insbesondere 50 - 120 ist.

Besonders vorteilhaft sind Kammpolymere in denen Struktureinheit (i) abgeleitet von Acrylsäure oder Methacrylsäure ist, und in denen die Struktureinheit (ii) abgeleitet von einem Polyethylenglykol-Methacrylat oder einem Alkenyl-Polyethylenglykolether mit 2 bis 5 C-Atomen in der Alkenylgruppe ist und die Polyethylenglykolkette 10 bis 150, bevorzugt 22 bis 120 Ethylenglykoleinheiten aufweist.

Vorteilhaft besteht das Kammpolymer ausschliesslich aus Struktureinheiten (i) und (ii).
Bevorzugt ist das molare Verhältnis von Struktureinheit (i) zu Struktureinheit (ii) 1 : 1 bis 25 : 1 , mehr bevorzugt 1.5 : 1 bis 23 : 1, noch mehr bevorzugt 2 : 1 bis 20 : 1, insbesondere 2.3 : 1 bis 18 : 1.

Es kann aber auch vorteilhaft sein, wenn das Kammpolymer noch weitere Struktureinheiten (iii) enthält, wobei sich die Struktureinheiten (iii) von den Struktureinheiten (i) und (ii) unterscheiden. Vorteilhafte weitere Struktureinheiten sind bevorzugt abgeleitet von (Meth)acrylsäurealkylesteren, Hydroxyalkyl(meth)acrylaten, N-Vinylpyrollidon, Vinylestern, Styrol, Halbamiden von Maleinsäure mit Sulfanilsäure oder mit Alkylaminen, insbesondere Hydroxyethylacrylat und Hydroxypropylacrylat.

Vorteilhaft ist Struktureinheit (iii) in 0 bis 70 Gewichts-%, bevorzugt 0.1 bis 50 Gewichts-%, insbesondere 0.5 bis 40 Gewichts-%, in dem Kammpolymer vorhanden.

Bevorzugt ist der Anteil an hydrophoben Struktureinheiten im anionischen Polymer unter 50 Mol-%, insbesondere unter 30 Mol-%, im Speziellen unter 10 Mol-%.

Eine hydrophobe Struktureinheit ist hierbei abgeleitet von einem Monomer, das in Wasser nicht oder sehr schlecht löslich ist.
Bevorzugt ist das anionische Polymer, insbesondere das Kammpolymer, ausschliesslich aus gut wasserlöslichen Struktureinheiten aufgebaut.

Bevorzugt weist das Kammpolymer einen Anteil von 1.5 bis 6, mehr bevorzugt 1.8 bis 5, insbesondere 2.0 bis 4, im Speziellen 2.2 bis 3.5, mmol anionische Funktionen pro g Polymer auf, wobei eine Phosphat- oder Phosphonatgruppe eine anionische Funktionalität von 2 aufweist.

Kammpolymere mit einer solchen Struktur sind besonders gut geeignet, die Suspension zu stabilisieren und Agglomeration der Partikel zu verhindern, wodurch sehr feine und stabile Suspensionen erhalten werden. Gleichzeitig sind sie hervorragend geeignet, mineralische Bindemittelzusammensetzungen, insbesondere zementöse Zusammensetzungen, die mit der Suspension beschleunigt werden, zu verflüssigen und die gute Verarbeitbarkeit dieser Zusammensetzungen über einen längeren Zeitraum zu gewährleisten, ohne die gewünschte rasche Festigkeitsentwicklung zu stark zu beeinflussen.

Bevorzugt hat das Kammpolymer ein mittleres Molekulargewicht Mw von 8'000 bis 150'000, mehr bevorzugt von 9'000 bis 120'000, insbesondere 10'000 bis 100'000, im Speziellen 11'000 bis 80'000.
Das Molekulargewicht, wie das gewichtsgemittelte Molekulargewicht Mwoder das zahlengemittelte Molekulargewicht Mₙ, wird hierbei durch Gel-Permeations-Chromatographie (GPC) mit Polyethylenglykol als Standard bestimmt. Als Eluent wird eine 0.1 N NaNO₃-Lösung verwendet, deren pH-Wert mit NaOH auf 12 eingestellt wurde.
Diese Technik ist dem Fachmann an sich bekannt.

Geeignete Herstellungsmethoden für Kammpolymere sind eine freie radikalische Copolymerisation der entsprechenden Monomere oder eine polymeranaloge Veresterung oder Amidierung von Polymeren die Carboxylgruppen umfassen mit einseitig verschlossenen Polyalkylenglykolen oder Polyalkylenglykolaminen.

Vorteilhafte Kammpolymere können auch via "lebender radikalischer Polymerisation" geeigneter Monomere hergestellt werden. Speziell vorteilhaft sind Kammpolymere mit Block- oder mit Gradientenstruktur. Beispielhafte geeignete Polymere sowie deren Herstellung sind in WO2015/144886 und WO 2017/050907 beschrieben.

Die Verbindung zur Stabilisierung der Suspension liegt bevorzugt in 5 bis 40 Teilen, mehr bevorzugt 8 bis 35 Teilen, noch mehr bevorzugt 10 bis 32 Teilen, besonders bevorzugt 11 bis 30 Teilen, gerechnet als Feststoff, bezogen auf 100 Teile Calciumhydroxid, in der wässrigen Suspension vor.

Eine solche Menge bewirkt eine sehr gute Dispergierung der Calciumhydroxid-Partikel und eine gute Lagerstabilität der Suspension.

Überraschenderweise hat sich gezeigt, dass die Stabilität der Suspension noch besser ist, wenn der pH-Wert der wässrigen Suspension erhöht wird. Dies wird vorteilhaft durch Zugabe von Alkalihydroxid während oder nach der Herstellung der Suspension erreicht.
Vorteilhaft liegt der pH-Wert der Suspension über 12.0 und unter 13.8, gemessen bei 24°C.

Eine besonders geeignete wässrige Suspension umfasst
- 8 bis 15 Gewichts-% Calciumhydroxid, wobei mindestens 50 Gewichts-%, bevorzugt mindestens 65 Gewichts-%, des Calciumhydroxids als Nanopartikel vorliegen,
- 15 bis 25 Gewichts-% Alkalisalz, insbesondere NaNO₃, und
- 0.8 bis 3 Gewichts-% Kammpolymer,
bezogen auf 100 Gewichts-% der wässrigen Suspension.

Die Suspension kann vorteilhaft noch wenigstens ein weiteres Additiv enthalten, insbesondere einen Verdicker, bevorzugt auf Basis eines natürlichen oder synthetischen Polymers, und/oder einen Entschäumer.

Ein weiterer Gegenstand der Erfindung ist ein Verfahren zur Herstellung einer wässrigen Suspension umfassend
- 5 bis 65 Gewichts-% Calciumhydroxid, wobei mindestens 50 Gewichts-% des Calciumhydroxids als Nanopartikeln vorliegen, und
- mindestens eine Verbindung zur Stabilisierung der Suspension.
Bevorzugt wird die wässrige Suspension durch Umsetzung eines wasserlöslichen Calciumsalzes mit einem Alkalihydroxid hergestellt, wobei die Verbindung zur Stabilisierung der Suspension, während der Umsetzung vorhanden ist, oder nach der Umsetzung zugegeben wird.
Insbesondere ist das wasserlösliche Calciumsalz ausgewählt aus der Gruppe umfassend Calciumnitrat, Calciumchlorid, Calciumacetat, Calciumformiat und Calciumthiocyanat und eine Mischung davon.
Für bestimmte Anwendungen ist es vorteilhaft, wenn das wasserlösliche Calciumsalz kein Chlorid ist. Chloride fördern die Korrosion, beispielsweise von Armierungseisen in Beton.

Das Alkalihydroxid ist bevorzugt Natriumhydroxid oder Kaliumhydroxid. Insbesondere ist das molare Verhältnis von Calciumsalz zu Alkalihydroxid 1.0 : 2.0 bis 2.4, bevorzugt 1.0 : 2.02 bis 2.3.

Die Umsetzung erfolgt bevorzugt in Wasser oder einem Gemisch aus Wasser und einem mit Wasser mischbaren Lösemittel, insbesondere einem Alkohol, am meisten bevorzugt in reinem Wasser.
Bevorzugt wird Wasser mit geringem Gehalt an gelöstem CO₂ verwendet.
In einer vorteilhaften Ausführungsform wird die Reaktion unter Schutzgas oder CO₂-armer Luft durchgeführt.
Dadurch wird die Bildung von Calciumcarbonat vermindert.

Vorteilhaft wird die wässrige Suspension durch folgende Schritte hergestellt:
(a) Bereitstellen einer wässrigen Lösung **A** enthaltend ein wasserlösliches Calciumsalz, insbesondere Calciumnitrat, Calciumchlorid, Calciumacetat, Calciumformiat, Calciumthiocyanat oder eine Mischung davon, bevorzugt mit mindestens 5 Gewichts-%, mehr bevorzugt mindestens 15 Gewichts-%, insbesondere mindestens 20 Gewichts-%, Calciumsalz,
(b) Bereitstellen einer wässrigen Lösung **B** enthaltend ein Alkalihydroxid, bevorzugt NaOH, KOH oder eine Mischung davon, bevorzugt mit mindestens 5 Gewichts-%, mehr bevorzugt mindestens 10 Gewichts-%, insbesondere mindestens 18 Gewichts-%, Alkalihydroxid,
(c) in Kontakt bringen von Lösung **A** und Lösung **B**, wobei die beiden Lösungen sehr rasch und intensiv, bevorzugt kontinuierlich, vermischt werden, und
(d) Austragen der entstanden Suspension aus dem Reaktionsgefäss oder dem kontinuierlichen Reaktor,
wobei eine Verbindung zur Stabilisierung der Suspension der Lösung **A**, der Lösung **B oder** beiden Lösungen, oder der hergestellten Suspension, zugegeben wird.

Bevorzugt liegt die Verbindung zur Stabilisierung der Suspension in Lösung **A** und/oder Lösung **B** vor, insbesondere vollständig in Lösung **A.**

Die bevorzugten Verbindungen zur Stabilisierung der Suspension sind bereits vorgängig beschrieben.

Bevorzugt enthält Lösung **A** 10 bis 87 Gewichts-%, mehr bevorzugt 15 bis 85 Gewichts-%, besonders bevorzugt 20 bis 80 Gewichts-%, Calciumsalz. Bevorzugt enthält Lösung **A** als Calciumsalz Calciumnitrat, insbesondere Calciumnitrat-Tetrahydrat. Calciumnitrat-Tetrahydrat ist besonders gut wasserlöslich, was vorteilhaft für die Reaktion ist.
Bevorzugt enthält Lösung **B** 10 bis 50 Gewichts-%, mehr bevorzugt 20 bis 40 Gewichts-%, Alkalihydroxid, insbesondere Natriumhydroxid.

In einer bevorzugten Ausführungsform der vorliegenden Erfindung werden Lösung **A** und Lösung **B** gleichzeitig in ein Reaktionsgefäss oder einen kontinuierlichen Reaktor dosiert, worin sie intensiv vermischt werden. Die Dosierung der Lösungen erfolgt bevorzugt in so einer Weise, dass das molare Verhältnis von Calciumsalz zu Alkalihydroxid 1 : 2.0 bis 2.4, bevorzugt 1 : 2.02 bis 2.3 während des gesamten Dosierzeitraums weitgehend eingehalten wird. Bevorzugt erfolgt das intensive Vermischen in einem kontinuierlichen Reaktor. Bevorzugt werden Lösung **A** und Lösung **B** sehr rasch, vorteilhaft unter Druck, in den kontinuierlichen Reaktor dosiert.
Bevorzugt ist die Reaktionszeit sehr kurz.

Bevorzugt erfolgt das rasche und intensive Vermischen der beiden Lösungen kontinuierlich und die Mischzeit liegt bevorzugt unter 1 Minute, mehr bevorzugt unter 30 Sekunden, insbesondere unter 10 Sekunden, im Speziellen unter 1 Sekunde.

Ein solches Verfahren ist einfach und schnell und es werden überraschenderweise Calciumhydroxid Nanopartikel mit einer engen Partikelgrössenverteilung erhalten.

In einer weiteren bevorzugten Ausführungsform der Erfindung kann die wässrige Suspension zur Erhöhung des Feststoffgehaltes noch mit geeigneten Mitteln aufkonzentriert werden, insbesondere durch Entfernen, beispielsweise durch Abdampfen, eines Teils des Wassers.
Dadurch kann die Suspension in geringerer Dosierung eingesetzt und Transport- und Lagerkosten reduziert werden.

Die wässrige Suspension von Calciumhydroxid Partikeln kann gegebenenfalls noch von Hilfsstoffen oder Nebenprodukten, die bei der Herstellung verwendet wurden oder entstehen, gereinigt werden. Dies kann insbesondere mittels lonenaustausch, Filtration oder Ultrafiltration erfolgen.

Bevorzugt erfolgen sowohl die Herstellung der Suspension als auch die Reinigung und/oder das Aufkonzentrieren kontinuierlich, bevorzugt in direkt aufeinanderfolgenden Schritten.
Dies spart Zeit und Kosten.

Die erfindungsgemässe Suspension kann für unterschiedliche Zwecke eingesetzt werden, beispielsweise zur Neutralisation von sauren Lösungen oder als Beschleuniger für mineralische Bindemittelzusammensetzungen.

Bevorzugt wird die wässrige Suspension zur Beschleunigung einer mineralischen Bindemittelzusammensetzung, insbesondere einer zementösen Zusammensetzung, verwendet.
Bevorzugt enthält die mineralische Bindemittelzusammensetzung noch Zuschlagstoffe.
Bevorzugt ist die mineralische Bindemittelzusammensetzung ein Mörtel oder Beton.

Die wässrige Suspension ist hervorragend geeignet, das Abbinden mineralischer Bindemittel, insbesondere von Zement, zu beschleunigen, wodurch rasch gute Festigkeiten erreicht werden, was sehr wünschenswert ist.

Als Zement sind alle gängigen Zemente, insbesondere die unter DIN EN 197-1 klassifizierten Zemente: Portlandzement (CEM I), Portlandkompositzement (CEM II), Hochofenschlackezement (CEM III), Pozzolanischer Zement (CEM IV) und Kompositzement (CEM V) geeignet, sowie Spezialzemente wie beispielsweise Calciumaluminatzement oder Calciumsulfoaluminatzement. Selbstverständlich sind Zemente, die gemäss einem alternativen Standard, wie beispielsweise dem ASTM-Standard oder dem JIS-Standard produziert werden, gleichermassen geeignet.

Vorteilhaft wird die wässrige Suspension in solch einer Menge dosiert, dass in der mineralischen Bindemittelzusammensetzung 0.05 bis 6 Gewichts-%, mehr bevorzugt 0.1 bis 5 Gewichts-%, insbesondere 0.2 bis 4 Gewichts-%, Calciumhydroxid-Partikel, bezogen auf das Gewicht des mineralischen Bindemittels, vorliegen.
Eine solche Menge bewirkt eine gute Beschleunigung des Abbindens.

Die erfindungsgemässe wässrige Suspension verkürzt nicht nur die Ruheperiode, das ist die Zeit zwischen dem Vermischen von Zement mit Wasser bis zum Beginn der exothermen Hydratationsreaktion, auch als Abbindebeginn bezeichnet, sondern sie beschleunigt auch die Hydratationsreaktion selbst.
Dies ist besonders für Anwendungen bei tieferer Temperatur, insbesondere unter 20°C oder unter 15°C, wichtig, da bei tiefer Temperatur die Ruheperiode verlängert und die Hydratationsreaktion von Zement stark verlangsamt ist.

Überraschenderweise wird durch diese Beschleunigung die gute Verarbeitbarkeit der zementösen Zusammensetzung nicht beeinflusst und auch die Verarbeitungsdauer nicht verkürzt. Das heisst, dass eine Mörtel- oder Betonmischung, die die wässrige Suspension enthält, sofort und nach 60 oder 90 Minuten ein vergleichbares Ausbreitmass aufweist, wie eine Beton- oder Mörtelmischung ohne die wässrige Suspension, bei gleichem W/Z. Der W/Z gibt hierbei das Gewichtsverhältnis von Wasser zu Zement an.
Speziell vorteilhaft ist die erfindungsgemässe Suspension für die Anwendung in Transportbeton, weil die Verarbeitungsdauer nicht beeinflusst und trotzdem rasch gute Festigkeit erreicht wird.

Bevorzugt umfasst die zementöse Zusammensetzung noch wenigstens ein Additiv, beispielsweise ein Betonzusatzmittel und/oder ein Mörtelzusatzmittel. Das wenigstens eine Additiv umfasst insbesondere einen Entschäumer, ein Netzmittel, einen Farbstoff, ein Konservierungsmittel, ein Fliessmittel, einen Verzögerer, einen weiteren Beschleuniger, ein Polymer, einen Luftporenbildner, ein Rheologiehilfsmittel, einen Viskositätsmodifizierer, ein Pumphilfsmittel, einen Schwindreduzierer, einen Korrosionsinhibitor oder Fasern, oder Kombinationen davon.
Solche Zusatzmittel sind dem Fachmann bekannt.

Bevorzug wird die Suspension der mineralischen Bindemittelzusammensetzung, insbesondere der zementösen Zusammensetzung, zusammen mit dem Anmachwasser oder nach dem Anmachwasser zugegeben.
Bevorzugt wird die Suspension mit der Zusammensetzung in einem geeigneten Mischgefäss mit einem mechanischen Mischer für mindestens 20 Sekunden gut gemischt.
Das gewährleistet eine homogene Verteilung der Calciumhydroxid-Partikel in der Mischung und eine gute gleichmässige Wirkung als Beschleuniger.

Ein weiter Gegenstand der vorliegenden Erfindung ist eine mineralische Bindemittelzusammensetzung umfassend die erfindungsgemässe wässrige Suspension.

Ein weiter Gegenstand der vorliegenden Erfindung bezieht sich auf einen Formkörper erhältlich durch Aushärten der mineralischen Bindemittelzusammensetzung wie vorgängig beschrieben.
Der Formkörper ist bevorzugt ein Bauwerk oder ein Teil eines Bauwerks, wobei ein Bauwerk z.B. eine Brücke, ein Gebäude, ein Tunnel, eine Fahrbahn, oder eine Start- und Landebahn sein kann.

Aus den nachfolgenden Ausführungsbeispielen ergeben sich weitere vorteilhafte Ausführungsformen der Erfindung.

### Kurze Beschreibung der Zeichnung

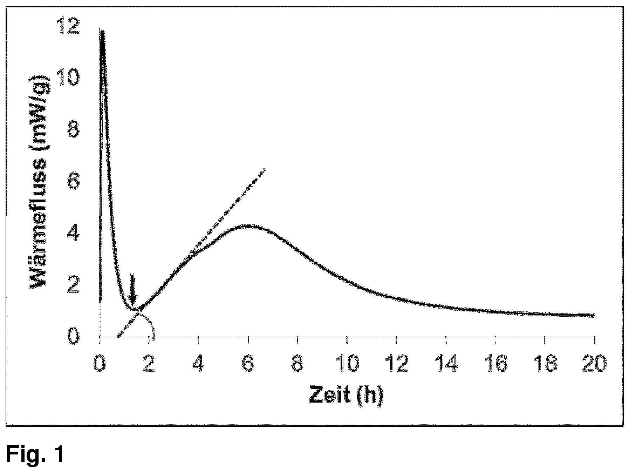

Zur Erläuterung der Ausführungsbeispiele wird Figur 1 verwendet.
**Fig 1** zeigt: grafische Darstellung der zeitlichen Entwicklung der Hydratationswärme.

In Fig.1 ist die grafische Darstellung der zeitlichen Entwicklung der Hydratationswärme einer Zementpaste, gemessen mit isothermer Wärmeflusskalorimetrie, dargestellt. Der Pfeil markiert den Abbindebeginn und die unterbrochene Linie den Anstieg der Kurve mit einem eingezeichneten Anstiegswinkel.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.
"Bsp." steht für "Beispiel"
"Ref." steht für "Referenz-Beispiel"

### 1. Beschreibung der Messmethoden

**Partikelgrösse mittels HELOS:** Die Partikelgrösse der Calicumhydroxid-Suspensionen wurde mittels Laserbeugung bestimmt. Für die Messung wurde das Messgerät HELOS, ausgerüstet mit der Dispergiereinheit Quixel, beides von Sympatec, Deutschland, verwendet. Das Gerät erfasst Partikelgrössen von 0.10 bis 8'750 µm. Für die Messungen wurden die Suspensionen mit gesättigter Calciumhydroxidlösung verdünnt.

**Partikelgrösse mittels Nanophox:** Die Partikelgrösse der Calciumhydroxid-Nanopartikel wurde mittels dynamischer Lichtstreuung mit Photonenkreuzkorrelationsspektroskopie bestimmt. Für die Messung wurde das Messgerät Nanophox der Firma Sympatec GmbH, Deutschland, verwendet. Das Gerät erfasst Partikelgrössen von 0.5 bis 10'000 nm. Die Probe muss nicht verdünnt werden. Vor der Messung wurde die Probe für eine Minute mit einer Ultraschallsonde homogenisiert.

Die **Lagerstabilität** der Suspensionen wurde folgendermassen bestimmt: In einer Zentrifuge (Heraeus™ Biofuge Primo R von Thermo Scientific™), ausgerüstet mit einem Rotor mit fixierten Winkeln von 45°, wurden jeweils 50 ml der frischen und gut gerührten Suspension in Falcon®-Zentrifugenröhrchen (50 ml) mit Schraubverschluss eingefüllt und bei 8000 Umdrehungen pro Minute für 15 Minuten bei 23°C zentrifugiert. Anschliessend wurden die obersten 40 ml aus dem Zentrifugenröhrchen entnommen und deren Trübung bestimmt.

Die **Trübung** wurde nephelometrisch (90°) gemäss US EPA 180.1 bestimmt. Hierfür wurde ein Turbidimeter HACH® 2100AN der Firma HACH®, Deutschland, mit einer Wolfram-Lichtquelle eingesetzt und die Einheit NTU (Nephelometric Turbidity Unit) verwendet.

Das **Hydratationsverhalten der Zementpasten** wurde mit isothermer Wärmeflusskalorimetrie gemessen. Hierfür wurde das Gerät TAM Air der Firma TA Instruments, USA eingesetzt. Die zeitliche Entwicklung der Hydratationswärme im Vergleich zu einer Referenzprobe aus ausgehärtetem Zement wurde gemessen. Die Zeitspanne zwischen dem Vermischen des Zements mit Wasser bis zum ersten Anstieg des Wärmeflusses nach Erreichen des ersten Minimums wird als Zeit bis zum Abbindebeginn gewertet.
Zur Bestimmung des Anstiegswinkels der Wärmeflusskurve wurde eine Tangente an den Wendepunkt des Kurvenabschnittes der zwischen Abbindebeginn und nächstem Maximum liegt, angelegt. Der Winkels den die Tangente mit der horizontalen Achse bildet wird als Anstiegswinkel der Wärmeflusskurve gewertet. Der Anstiegswinkel ist ein Mass für die Geschwindigkeit der Hydratationsreaktion. Je schneller die Reaktion ist, desto steiler ist der Anstieg und desto grösser ist der Winkel.
Eine typische Wärmeflusskurve und ihre Auswertung sind in Fig. 1 dargestellt.

Das **Ausbreitmass der Mörtelmischungen** wurde gemäss EN 1015-3 bestimmt.

**Abbindebeginn und Abbindeende der Mörtelmischungen** wurden durch Messen der Temperatur im Verlauf der Zeit nach dem Anmachen mit Wasser ermittelt. Die Temperaturmessung erfolgte mit einem Thermoelement als Temperatursensor an einer Mörtelprobe welche in einem isolierten Gefäss in einem auf 20°C temperierten Raum gelagert wurde.
Als Abbindebeginn wird für diese Beispiele die Zeit, die zwischen dem Vermischen mit Wasser bis zum Zeitpunkt des Anstiegs der Temperaturkurve nach der Induktionsphase (= Ruhephase) verstrichenen ist, bezeichnet.
Als Abbindeende wird für diese Beispiele die Zeit, die zwischen dem Vermischen mit Wasser bis zum Erreichen des nach der Induktionsphase auftretenden Temperaturmaximums verstrichenen ist, bezeichnet.

Die **Druckfestigkeit der ausgehärteten Mörtel** wurde an Mörtelprismen von 4 x 4 x 16 cm bestimmt. Hierfür wurde der frische Mörtel in entsprechende Formen gefüllt und bei 20°C gelagert. Nach 8 bzw. 24 Stunden wurde die Druckfestigkeit der Mörtelprismen gemäss EN 196-1 bestimmt.

### 2. Verwendete Materialien

Polymer P1 ist eine wässrige Lösung eines Kammpolymers, das aus Acrylsäure-Einheiten und Polyethylenglykolmethacrylat-Einheiten (Mw des Polyethylenglykols 5000 g/mol) in einem molaren Verhältnis von 15 zu 1 besteht und einen Feststoffgehalt von 32 Gewichts-% hat.
Sika® ViscoCrete®-20 HE (VC 20 HE) ist eine wässrige Lösung eines Superverflüssigers auf Basis eines modifizierten Polycarboxylates, erhältlich bei Sika Schweiz AG, Schweiz.
SikaRapid®-1 ist ein Erhärtungsbeschleuniger, erhältlich bei Sika Schweiz AG, Schweiz.
SikaRapid® C-100 ist ein Erhärtungsbeschleuniger, erhältlich bei Sika Schweiz AG, Schweiz.
Emsure® ACS ist ein Calciumhydroxid-Pulver, erhältlich bei Merck KGaA, Deutschland.
Verit Natur ist ein Weisskalkhydrat mit mindestens 93 Gewichts-% der Partikel <90 µm und einem Blaine-Wert von 20'000 m²/g (Angaben aus dem Produktdatenblatt), erhältlich bei Schretter und Cie GmbH & Co KG, Österreich.

Zement CEM I 42.5 N ist ein Portlandzement, erhältlich bei Jura-Cement-Fabriken AG, Schweiz.
Zement CEM I 52.5 R ist ein Portlandzement, erhältlich bei Holcim Schweiz unter dem Handelsnamen Normo 5R.

### 3. Wässrige Calciumhydroxid-Suspensionen

### Herstellung der Suspensionen S1 und S2

In einem Becherglas wurden 30.0 g Polymer P1 in 335.2 g Wasser gelöst, anschliessend wurden unter starkem Rühren mit einem Propellerrührer 54.7 g Calciumhydroxid-Pulver eingestreut und danach das Natriumnitrat in der Suspension gelöst. Sobald der Rührer abgestellt wurde, setzte sich ein Teil des Calciumhydroxids am Boden des Rührgefässes ab.
Die Suspensionen S1 und S2 hatten die in Tabelle 1 angegebenen Zusammensetzungen und Eigenschaften.

### Herstellung der Suspension S3

Die Suspension S3 wurde wie Suspension S2 hergestellt, aber anstelle von Natriumnitrat wurde dieselbe Gewichtsmenge an Wasser zugegeben. Sobald der Rührer abgestellt wurde, setzte sich ein Teil des Calciumhydroxids am Boden des Rührgefässes ab.
Die Suspension S3 hatte die in Tabelle 1 angegebene Zusammensetzung und Eigenschaften.

### Herstellung der Suspension S4

Calciumnitratlösung: 174.4 g Ca(NO₃)₂*4H₂O (0.739 mol) wurden in 62 g warmem Wasser (45°C) gelöst und anschliessend 30 g Polymer P1 in der Lösung aufgelöst.
Natronlaugelösung: 59.1 g NaOH (1.478 mol) wurden unter Kühlen in 220 g Wasser gelöst.

Die Calciumnitratlösung wurde in einem 1-Liter-Rundkolben vorgelegt. Unter Rühren mit einem Propellerrührer wurde innerhalb von 5 Minuten die Natronlaugelösung über einen Tropftrichter zugegeben. Die entstandene Suspension wurde für weitere 60 Minuten gerührt.
Die Suspension S4 hatte die in Tabelle 1 angegebene Zusammensetzung und Eigenschaften.

### Herstellung der Suspension S5

Es wurden die gleichen Lösungen wie für Suspension S3 beschrieben eingesetzt. In diesem Beispiel wurden aber beide Lösungen gleichzeitig in einen kontinuierlichen Reaktor dosiert, die Vermischung erfolgte mit hoher Mischintensität und kurzer Mischzeit. Die entstandene Suspension wurde kontinuierlich aus dem Reaktor ausgetragen.
Die Suspension S5 hatte die in Tabelle 1 angegebene Zusammensetzung und Eigenschaften.

Die Zusammensetzungen in Gewichts-% sowie die Eigenschaften der Suspensionen S1 bis S5 sind in Tabelle 1 angegeben.

**Tabelle 1**

| | Ref. 1 | Ref. 2 | Ref. 3 | Ref. 4 | Bsp. 1 |
|---|---|---|---|---|---|
| | S1 | S2 | S3 | S4 | S5 |
| Calciumhydroxid-Typ | Emsure ® ACS | Verit Natur | Verit Natur | Aus Fällungsreaktion | Aus Fällungsreaktion |
| Zusammensetzung in Gewichts-% | | | | | |
| Wasser | 65.2 | 65.2 | 88.2 | 65.2 | 65.2 |
| Calciumhydroxid | 10.0 | 10.0 | 10.0 | 10.0 | 10.0 |
| NaNO₃ | 23.0 | 23.0 | 0 | 23.0 | 23.0 |
| Polymer P1** | 1.8 | 1.8 | 1.8 | 1.8 | 1.8 |

| Trübung der oberen Phase nach dem Zentrifugieren | | | | | |
|---|---|---|---|---|---|
| Trübung (NTU) | 256 | 291 | n.v.* | 227 | 9614 |

| Partikelgrösse mit HELOS (µm) | | | | | |
|---|---|---|---|---|---|
| D10 | 0.78 | 0.8 | n.v.* | 0.41 | 0.17 |
| D50 | 2.42 | 3.0 | | 2.9 | 0.50 |
| Partikelgrösse mit Nanophox (nm) | | | | | |
| D10 | n.v.* | n.v.* | n.v.* | n.v.* | 140 |
| D50 | | | | | 163 |
| D90 | | | | | 192 |

| | | | | | |
|---|---|---|---|---|---|
| *...nicht gemessen **...gerechnet ohne Wasser, reiner Feststoff | | | | | |

### 4. Anwendungstests

### 4.1 Test in Zementleim

Zu 100 g Zement CEM I 42.5 N wurden 32.4 g Wasser und 4 g der wässrigen Suspension gemäss Tabelle 2 zugegeben und für 2 Minuten mit einem mechanischen Rührer gemischt. Anschliessend wurde die Entwicklung der Hydratationswärme gemessen.
Für den Vergleich ohne Zusatzmittel (Ref. 5) wurden 100 g Zement mit 35 g Wasser in der gleichen Weise vermischt.
Für den Vergleich mit NaNO₃ als einziges Zusatzmittel (Ref. 6) wurden 0.92 g NaNO₃ in 35 g Wasser gelöst und mit dem Zement, wie oben beschrieben, vermischt.

Die Auswertungen der Messungen der Hydratationswärme sind in Tabelle 2 angegeben.

**Tabelle 2**

| | Ref. 5 | Ref. 6 | Ref. 7 | Ref. 8 | Ref. 9 | Ref. 10 | Bsp. 2 |
|---|---|---|---|---|---|---|---|
| Zusatzmittel | ohne | NaNO₃ | S1 | S2 | S3 | S4 | S5 |
| Abbindebeginn (h:min) | 1:40 | 1:30 | 1:43 | 1:36 | 1:35 | 1:44 | 1:25 |
| Anstiegswinkel der Wärmeflusskurve (°) | 40 | 45 | 48 | 48 | 45 | 48 | 53 |

### 4.2 Test in Mörtelmischungen

### Mörtelserie 1

In einem Zwangsmischer der Firma Hobart wurden 750 g Zement CEM I 52.5 R, 141 g Kalksteinfüller, 738 g Sand 0-1 mm, 1107 g Sand 1-4 mm und 1154 g Sand 4-8 mm 1 Minute trocken gemischt. Anschliessend wurden 292.5 g einer Mischung aus Wasser und den in Tabelle 3 angegebenen Zusatzmitteln unter Rühren innerhalb von 30 Sekunden zu der trockenen Mörtelmischung in den Mischer gegeben und der Mörtel noch weitere 2.5 Minuten gemischt. Die Gesamtmischzeit nass dauerte jeweils 3 Minuten.
Die Dosierung der Zusatzmittel, das Ausbreitmass sowie die Abbindezeit der Mörtelmischungen sind in Tabelle 3 angegeben.

**Tabelle 3**

| | Zusatzmittel | Dos.¹⁾ | Ausbreitmass (in mm) | | | | Abbindezeit (h:min) | |
|---|---|---|---|---|---|---|---|---|
| | | | 0 min. | 30 min. | 60 min. | 90 min. | Beginn | Ende |
| Ref. 11 | VC 20 HE²⁾ | 1 | 257 | 257 | 247 | 171 | 3:40 | 12:30 |
| Ref. 12 | VC 20 HE | 1 | 233 | 226 | 184 | 135 | 3:15 | 9:50 |
| | SikaRapid®-1 | 1 | | | | | | |
| Ref. 13 | VC 20 HE | 1 | 270 | 248 | 194 | 128 | 3:00 | 9:50 |
| | SikaRapid® C-100 | 1 | | | | | | |
| Bsp. 3 | VC 20 HE | 1 | 268 | 262 | 241 | 174 | 2:40 | 9:50 |
| | S5 | 2 | | | | | | |

| | | | | | | | | |
|---|---|---|---|---|---|---|---|---|
| ¹⁾ Dosierung in Gewichts-% Lösung bzw. Suspension auf Zement ²⁾ Sika® ViscoCrete®-20 HE ³⁾ nicht gemessen, Mischung zu steif | | | | | | | | |

### Mörtelserie 2

Mörtelmischungen wie in Mörtelserie 1 beschrieben, wurden hergestellt. In dieser Serie wurden jedoch 300 g einer Mischung aus Wasser und den Zusatzmitteln gemäss Tabelle 4 verwendet.
Die Dosierung der Zusatzmittel, das Ausbreitmass sowie die Druckfestigkeit der Mörtelmischungen sind in Tabelle 4 angegeben.

**Tabelle 4**

| | Zusatzmittel | Dos.¹⁾ | Ausbreitmass (in mm) | | | | Druckfestigkeit (N/mm²) | |
|---|---|---|---|---|---|---|---|---|
| | | | 0 min. | 30 min. | 60 min. | 90 min. | 8 Stunden | 24 Stunden |
| Ref. 14 | VC 20 HE²⁾ | 1 | 240 | 220 | 171 | 114 | 5.4 | 48.7 |
| Bsp. 4 | VC 20 HE | 1 | 249 | 218 | 165 | 116 | 7.9 | 53.8 |
| | S5 | 2 | | | | | | |

| | | | | | | | | |
|---|---|---|---|---|---|---|---|---|
| ¹⁾ Dosierung in Gewichts-% Lösung bzw. Suspension auf Zement ²⁾ Sika® ViscoCrete®-20 HE | | | | | | | | |

Es ist bei einem Vergleich der Resultate in Tabelle 3 und Tabelle 4, insbesondere von Ref. 11 und Ref. 14, zu berücksichtigen, dass die Mörteltests in unterschiedlichen Messserien und zu unterschiedlichen Daten durchgeführt wurden. Zement unterschiedlichen Alters und Sande aus unterschiedlichen Chargen unterliegen Schwankungen, die die Messwerte beeinflussen können.

Innerhalb jeder Messserie (Messserie in Tabelle 3 bzw. Messserie in Tabelle 4) wurden jedoch immer derselbe Zement und dieselben Sande verwendet.

## Patentansprüche

1. Wässrige Suspension umfassend
- 5 bis 65 Gewichts-% Calciumhydroxid, wobei mindestens 50 Gewichts-% des Calciumhydroxids in Form von Nanopartikeln vorliegen, und
- mindestens eine Verbindung zur Stabilisierung der Suspension.

2. Wässrige Suspension gemäss Anspruch1, **dadurch gekennzeichnet, dass** das Calciumhydroxid zu mindestens 65 Gewichts-%, bevorzugt mindestens 75 Gewichts-%, insbesondere mindestens 85 Gewichts-%, in Form von Nanopartikeln vorliegt.

3. Wässrige Suspension gemäss einem der vorhergehenden Ansprüche, **dadurch gekennzeichnet, dass** die Calciumhydroxid Nanopartikel eine Partikelgrösse von unter 950 nm, bevorzugt von 10 bis 800 nm, mehr bevorzugt von 20 bis 500 nm, am meisten bevorzugt von 30 bis 400 nm, insbesondere von 40 bis 300 nm, im Speziellen von 50 bis 200 nm, und/oder einen D90-Wert von unter 800 nm, bevorzugt unter 600 nm, insbesondere unter 400 nm, im Speziellen unter 200 nm, gemessen mittels dynamischer Lichtstreuung mit Photonenkreuzkorrelationsspektroskopie, aufweisen.

4. Wässrige Suspension gemäss einem der vorhergehenden Ansprüche, **dadurch gekennzeichnet, dass** sie, wenn sie einen Gehalt von 10 Gewichts-% Calciumhydroxid aufweist, nach dem Zentrifugieren von 50 ml dieser Suspension in einem 50 ml Zentrifugenröhrchen über 15 Minuten bei 8000 Umdrehungen pro Minute, und Entnahme der obersten 40 ml für die Trübungsmessung, einen Trübungswert von über 3000 NTU, bevorzugt über 4000 NTU, mehr bevorzugt über 5000 NTU, insbesondere über 6000 NTU, im Speziellen über 7000 oder über 8000 NTU, gemessen mit einem HACH® 21 00AN Turbidimeter, aufweist.

5. Wässrige Suspension gemäss einem der vorhergehenden Ansprüche, **dadurch gekennzeichnet, dass** die Suspension 0.01 bis 2.5 mol, bevorzugt 0.1 bis 2.2 mol, eines Alkalisalzes, insbesondere eines Natrium-, Kalium- oder Lithiumsalzes, bevorzugt ein Natriumsalz, von Nitrat, Chlorid, Acetat, Formiat oder Thiocyanat, oder Mischungen davon, bezogen auf 1 mol Calciumhydroxid, umfasst.

6. Wässrige Suspension gemäss einem der vorhergehenden Ansprüche, **dadurch gekennzeichnet, dass** die Verbindung zur Stabilisierung der Suspension ein anionisches Polymer umfassend Carboxylatgruppen, Sulfatgruppen, Sulfonatgruppen, Phosphatgruppen oder Phosphonatgruppen, oder Mischungen davon, oder deren Salze, ist.

7. Wässrige Suspension gemäss einem der vorhergehenden Ansprüche, **dadurch gekennzeichnet, dass** die Verbindung zur Stabilisierung der Suspension ein Kammpolymer ist und Struktureinheiten der Formel I und Struktureinheiten der Formel II umfasst, 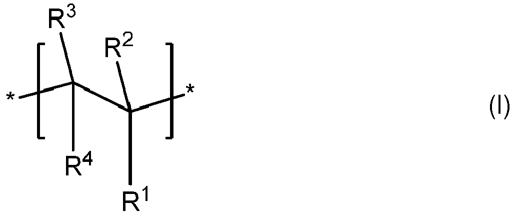 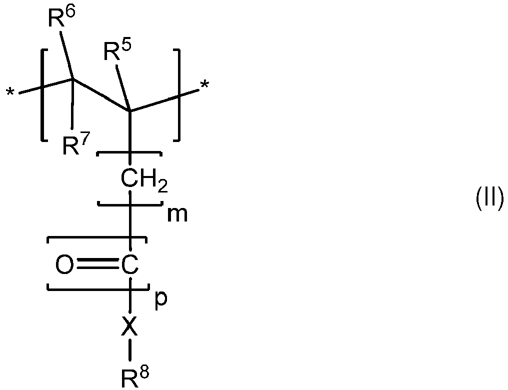 wobei
R¹, jeweils unabhängig voneinander, für -COOM, -SO₂-OM, -O-PO(OM)₂, -PO(OM)₂, -(CO)-NH-C(CH₃)₂-CH₂-SO₃M, -CH₂-SO₃M, 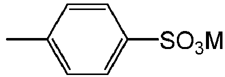 und/oder 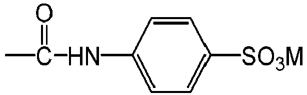 steht,
R², jeweils unabhängig voneinander, für H, -CH₂COOM oder eine Alkylgruppe mit 1 bis 5 Kohlenstoffatomen steht,
R³, R⁵ und R⁶, jeweils unabhängig voneinander, für H oder eine Alkylgruppe mit 1 bis 5 Kohlenstoffatomen stehen,
R⁴ und R⁷, jeweils unabhängig voneinander, für H, -COOM oder eine Alkylgruppe mit 1 bis 5 Kohlenstoffatomen stehen,
M, unabhängig voneinander, H⁺, ein Alkalimetallion oder ein Erdalkalimetallion, darstellt;
m = 0, 1 oder 2 ist,
p = 0 oder 1 ist,
X, jeweils unabhängig voneinander, für -O-, NH- oder -NR⁸- steht,,
R⁸ für eine Gruppe der Formel -[AO]ₙ-R^{a} steht,
wobei A = C₂- bis C₄-Alkylen, R^{a} für H, eine C₁- bis C₂₀-Alkylgruppe, - Cyclohexylgruppe oder -Alkylarylgruppe steht,
und n = 1 bis 250 ist.

8. Wässrige Suspension gemäss einem der vorhergehenden Ansprüche, **dadurch gekennzeichnet, dass** die Verbindung zur Stabilisierung der Suspension in 5 bis 40 Teilen, bevorzugt 8 bis 35 Teilen, mehr bevorzugt 10 bis 32 Teilen, insbesondere 11 bis 30 Teilen, gerechnet als Feststoff, bezogen auf 100 Teile Calciumhydroxid, vorliegt.

9. Wässrige Suspension gemäss einem der vorhergehenden Ansprüche, **dadurch gekennzeichnet, dass** sie
- 8 bis 15 Gewichts-% Calciumhydroxid, wobei mindestens 50 Gewichts-%, bevorzugt mindestens 65 Gewichts-%, des Calciumhydroxids als Nanopartikel vorliegen,
- 15 bis 25 Gewichts-% Alkalisalz, insbesondere NaNO₃, und
- 0.8 bis 3 Gewichts-% Kammpolymer,
bezogen auf 100 Gewichts-% der wässrigen Suspension, umfasst.

10. Verfahren zur Herstellung einer wässrigen Suspension umfassend die Schritte:
(a) Bereitstellen einer wässrigen Lösung **A** enthaltend ein wasserlösliches Calciumsalz, insbesondere Calciumnitrat, Calciumchlorid, Calciumacetat, Calciumformiat, Calciumthiocyanat oder eine Mischung davon, bevorzugt mit mindestens 5 Gewichts-%, mehr bevorzugt mindestens 15 Gewichts-%, insbesondere mindestens 20 Gewichts-%, Calciumsalz,
(b) Bereitstellen einer wässrigen Lösung **B** enthaltend ein Alkalihydroxid, bevorzugt NaOH, KOH oder eine Mischung davon, bevorzugt mit mindestens 5 Gewichts-%, mehr bevorzugt mindestens 10 Gewichts-%, insbesondere mindestens 18 Gewichts-%, Alkalihydroxid,
(c) in Kontakt bringen von Lösung **A** und Lösung **B**, wobei die beiden Lösungen sehr rasch und intensiv , bevorzugt kontinuierlich, vermischt werden, und
(d) Austragen der entstanden Suspension aus dem Reaktionsgefäss oder dem kontinuierlichen Reaktor,
wobei eine Verbindung zur Stabilisierung der Suspension der Lösung **A**, der Lösung **B** oder beiden Lösungen, oder der hergestellten Suspension, zugegeben wird.

11. Verfahren zur Herstellung der wässrigen Suspension gemäss Anspruch 10, **dadurch gekennzeichnet, dass** das rasche und intensive Vermischen der beiden Lösungen kontinuierlich erfolgt und die Mischzeit unter 1 Minute, bevorzugt unter 30 Sekunden, insbesondere unter 10 Sekunden, im Speziellen unter 1 Sekunde, liegt.

12. Verwendung der wässrigen Suspension gemäss einem der vorhergehenden Ansprüche zur Beschleunigung einer mineralischen Bindemittelzusammensetzung, insbesondere einer zementösen Zusammensetzung.

13. Verwendung gemäss Anspruch 12, wobei die wässrige Suspension in solch einer Menge dosiert wird, dass in der mineralischen Bindemittelzusammensetzung 0.05 bis 6 Gewichts-%, mehr bevorzugt 0.1 bis 5 Gewichts-%, insbesondere 0.2 bis 4 Gewichts-%, Calciumhydroxid-Partikel, bezogen auf das Gewicht des mineralischen Bindemittels, vorliegen.

14. Mineralische Bindemittelzusammensetzung umfassend die wässrige Suspension gemäss einem der Ansprüche 1 bis 11.

15. Formkörper erhältlich durch Aushärten der mineralischen Bindemittelzusammensetzung gemäss Anspruch 14.
